# EUROPEAN PATENT APPLICATION

(11) **EP 2 085 852 A2**
(43) Date of publication of application: **05.08.2009**
(21) Application number: 09151737.5
(22) Date of filing: 30.01.2009
(51) Int. Cl.: G05D 16/20

(54) **Time pulse pilot for pressure regulating control valve**

(30) Priority: 01.02.2008 CL 3172008
(71) Applicant: Industria de Plasticos Andes Drip Limitada, Bajo Molle, Iquique (CL)
(72) Inventor: Arenas Urbina, Jose Luis, Iquique (CL)
(74) Representative: Carpintero Lopez, Francisco

(57) **Abstract**

The invention consists of a pressure regulating pilot characterized by the communication of the valve chamber to high or low pressure sources being performed by time pulses during which throttling elements which communicate the chamber with such sources are opened. The frequency and duration of pulses are determined by an electronic controller, which also reads the pressure to be controlled through a pressure sensor and then compares this value to a pressure target value previously received by the controller. The electronic controller has the capacity to send and receive data signals to communicate with other devices.

## Description

### Description of the Previous Art

This invention relates to pressure regulating valves, and specifically to regulating pilots controlling these valves.

Regulating pressure of fluids that circulate through pipes is a need in the industry, mining and agriculture, and it is performed by means of pressure regulating valves. Regulating valves can be directly or indirectly operated, or pilot operated valves *(1).* This invention specifically addresses pilots of pressure regulating valves with pilot operated diaphragm.

The use of pilots for controlling pressure regulating valves is well known in the art. (2,3,4,5)
*1.* United States Patent 6,178,997 Adams et al. 2001*, Background of the invention*
*2.* *http:*//*www.bermad.com Catá*/*ogo general (general catalogue) p.* 38-39 *Catá*/*ogo serie (catalogue series) 400 p. 13-15*
*3. http:lwww.dorot.com Catá*/*ogo general (general catalogue) p. 24-35*
*4. http:lwww.arad.co.ll*/*PDF*/*Model_FG.pdf*
*5. http.*/*www.wattascv.com(pdf-files*/*Pressure Reducing Valves*/*115. pdf*

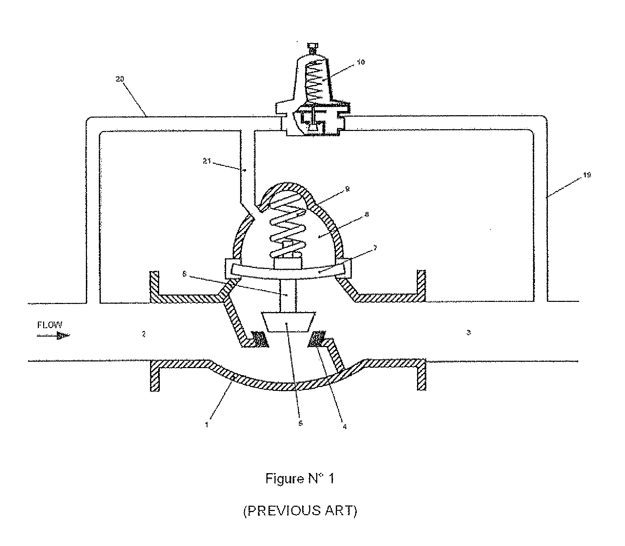

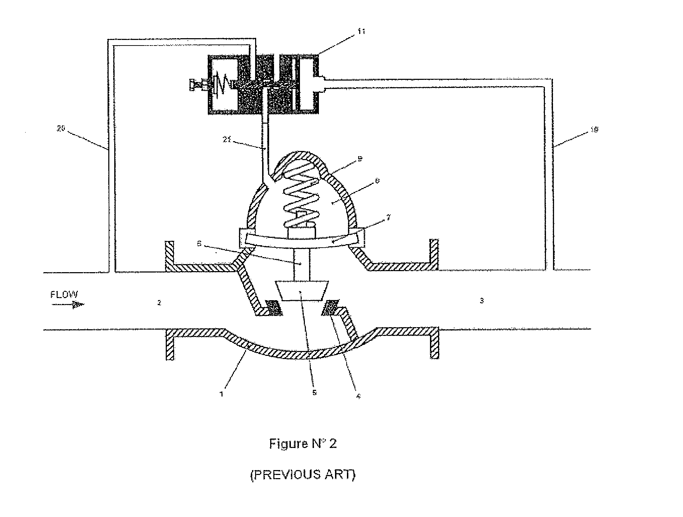

A pilot operated pressure regulating valve is a mechanical device illustrated in Figure N°1 and in Figure N°2, and comprises a body [1], an upstream inlet [2] and a downstream outlet [3].

Both figures relates to the configuration known as pressure reducing valve. As a part of the body of the valve, between the inlet and outlet, a seat [4] is provided over which a throttling element acts. This throttling element, generally a plug [5] is attached by means of a stem [6] to an actuator [7]; this actuator moves the stem and the plug between totally open and totally closed positions of the valve.

Generally, the actuator is a piston or a diaphragm as it is illustrated herein. The actuator isolates the upper part of the valve body generating a control chamber [8] where a spring is housed [9].

Two-way regulating pilot [10] or three-way regulating pilot [11] are used to control the actuator of the pressure regulating valve in accordance with a control parameter; in this case, the downstream pressure value. The pilot is usually connected to the actuator of the valve by means of a pipe [21], through another pipe [20] the pilot is connected upstream of the valve [2] and through another pipe [19] the pilot is connected downstream [3] of the valve.

The regulating pilot supplies controlled pressure within the chamber of the valve [8] through the pipe [21].

This controlled pressure is what moves the actuator [7] from the totally open position, zero pressure within the chamber, to the totally closed position, maximum pressure within the chamber.

The down force exerted by the spring [9] is added to the regulated pressure from the pipe [21] to the chamber [8] and they opposed to the pressure exerted by fluid over the lower portion of the actuator.

When the regulated pressure entering the chamber is high, the actuator moves down and the valve tends to close. If pressure generated by the pilot is low, the actuator moves up, and the valve tends to open.

In short, pressure supplied by the pilot is the pressure which controls the position of the actuator, which in turn allows more or less fluid to flow, thereby regulating the pressure thereof.

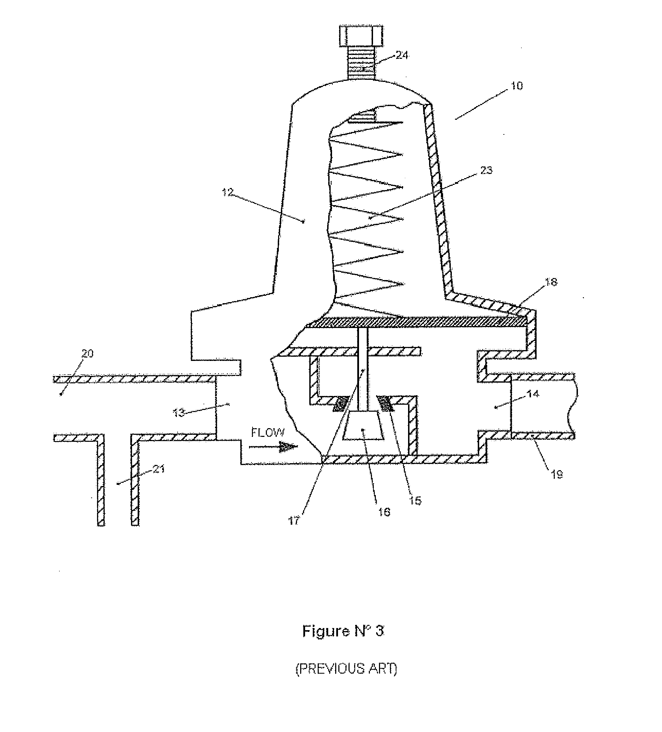

A typical model of a pilot known by those skilled in the art [10] is illustrated in Figure N°3 and it is known as a two-way pilot comprising: A body [12] with an inlet [13], an outlet [14] and a seat [15] between the inlet and outlet.

A throttling element or plug [16] located over the seat regulates the flow of the fluid between the inlet and outlet. The throttling element is secured by means of a vertical stem [17] to a horizontal flexible diaphragm [18]. The diaphragm, also called sensor, divides the body of the valve into a bottom portion where the fluid flows, and an upper portion which is isolated from fluid.

A spring [23] which tension can be regulated through compression exerted thereon by a calibrated screw [24] is located in the upper portion of the valve, on top of the diaphragm and it is not in contact with fluid. The position of the screw sets the spring tension, and determines the target work pressure or set point *(1).*

The outlet of the pilot is connected to fluid downstream of the pressure regulating valve through a pipe [19] so that the downstream pressure reaches the pilot exerting upward pressure against the flexible diaphragm.
The inlet of the pilot is connected to fluid upstream of the pressure regulating valve through a pipe [20]. Between the pilot and the upstream water inlet, a pipe [21] extends to the pressure regulating valve which supplies the control pressure for the actuator of the valve.

In operation, the diaphragm [18] is pushed towards an open position which allows fluid to flow through the pilot or it is pushed towards a closed position which prevents fluid from flowing through the pilot.
The spring pushes the flexible diaphragm down towards an open position and counteracts downstream pressure which pushes the diaphragm in the opposite direction, i.e, towards a closed position which restricts the flow of fluid through the seat of the pilot.

When downstream pressure exceeds the set point pressure regulated on the spring [23] by means of the screw [24], fluid flow is restricted and pressure towards the pressure regulating valve is increased. This increased pressure makes the actuator reduce the fluid flow through the valve, thereby reducing downstream pressure, and thus regulation is achieved. *(1,5,6)*
*6.* United States Patent 6, 371, 156 Walton et at 2002 *Background of the invention*

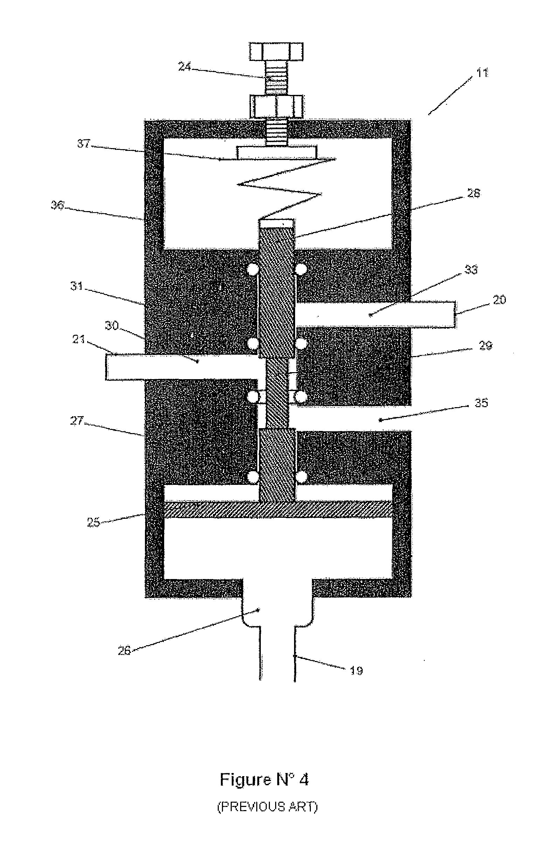

Another typical model of a pilot of the previous art [11] known as a three-way pilot is illustrated en Figure N°4 and comprises:
A vertical closed cylindrical body [36] having an upper hollow body portion, a bottom hollow body portion and a central solid body portion.

The upper hollow body portion houses a spring [37] which tension can be regulated through the compression exerted thereon by a calibrated screw [24].

The bottom hollow body portion houses a flexible diaphragm [25] located perpendicularly to the vertical shaft of the cylindrical body and having a lower outlet [26] connected to fluid downstream of the pressure regulating valve through a pipe [19].

The central solid body portion [27] having a bore which extends longitudinally through its center from the bottom end to the upper end communicating the bottom hollow body portion with the upper hollow body portion. A shaft [28] is slideably housed inside that bore, the upper hollow portion of the shaft being attached to the spring [37] and the bottom hollow portion to the flexible diaphragm [25]. This shaft is pressed down by the regulated pressure of the spring, also known as pressure set point. The same shaft is pulled up by the flexible diaphragm which receives downstream pressure. The shaft has a smaller diameter mid-section [29].

The central solid body also has a central horizontal bore [30], perpendicular to the longitudinal shaft. This bore extends from the cylinder outside layer [31] to the shaft of the cylinder, and it is in communication with the longitudinal bore where the vertical shaft slides [28]. This central bore is in communication with the actuator of the pressure regulation valve by means of a pipe [21].

On the outside layer, opposing to the central bore [30] two other horizontal bores are located, also extending from the outside layer to the center of the cylinder. One of them, the upper bore [33] is connected by means of a pipe [20] to the high pressure source at a point upstream of the pressure regulating valve. The other one, the lower bore [35] is connected to a low pressure source, which in this case is open to the atmosphere.

In operation, and depending on the downstream pressure, the shaft slides up or down, making the central portion of this shaft, the one with reduced diameter, alternatively face the upper bore with high upstream pressure or the lower one without pressure which is connected to the atmosphere.

When down pressure exceeds set point pressure regulated on the spring by the screw, the shaft is slid up, the lower diameter section faces the high pressure bore and pressure and fluid flow towards the actuator of the pressure regulating valve. This actuator reduces the fluid flow through the valve, thereby reducing downstream pressure, and thus regulation is achieved. (*2,3.4*)

Regulation is then achieved by temporarily exposing the chamber of the valve to a high pressure source or to a lower pressure source.

Main advantages of pressure regulating pilots of the previous art include: relatively low cost, no external energy is required to operate, and the fact that inside a small and autonomous unit (2) a pressure sensor, set point controller and a valve are combined.

Main drawbacks of known regulating pilots are:
1. Low reliability and they require frequent maintenance due to: a) the throttling mechanism or the slideable shaft get blocked as a result of the accumulation of corrosion and fouling, b) the spring may discalibrate or deregulate, c) they lose their throttling ability due to the accumulation of particles on the seat, or d) the diaphragms spoil or break.
2. Since the existing regulating pilots form an autonomous control system, they can not communicate with other control processes *(1),* and operators must go where these pilots are located to change the pressure set point.
3. They require additional valves for the regulating pilot to act as a cut-off or on-off valve.
4. The two-way pilot configuration does not allow the pressure regulating valve to open completely. *(3, page 25)*

### Description of the drawings

Figure N°1: Depicts a diagram (not to scale) of the components of a pressure regulating valve, with a two-way pilot, which helps to explain previous art.
Figure N°2: Depicts a diagram (not to scale) of the components of the pilot operated pressure regulating valve having a three way pilot, which helps to explain previous art.
Figure N°3: Depicts a diagram (not to scale) of the components of a two-way pressure regulating pilot, which helps to explain previous art.
Figure N°4: Depicts a diagram (not to scale) of the components of a three-way pressure regulating pilot, which helps to explain previous art.
Figure N°5: Depicts a diagram (not to scale) of the components of the pilot operated pressure regulating valve having a pulse pilot, which helps to explain the present invention.
Figure N°6: Depicts a diagram (not to scale) of the components of the pulse pressure regulating pilot, which helps to explain the present invention.
Figure N°7: Depicts a diagram (not to scale) of the components of a transducer or pressure sensor, which helps to explain the present invention.
Figure N°8: Depicts a diagram (not to scale) of the components of the pulse pressure regulating Pilot, which helps to explain the Example of the Application N°1.

### Description of the invention

The present invention, a time pulse regulating pilot presents a solution to the problem of reliability and frequent maintenance required by today's pressure regulating pilots. It also allows the regulating pilot to communicate and interchange data with other remote processes and further includes the capability of the pilot to operate the pressure regulating valve as a cut-off or on-off valve.

The pulse regulating pilot of this invention, differs from the pilots of the previous art mainly because in order to control pressure in the valve chamber an electronic controller is used, such controller generates time pulses which open equal throttling elements which communicate the valve chamber with a high pressure source or with a low pressure source and this pilot does not utilize throttling elements, slideable shafts, or springs, or diaphragms. By not using these mechanical elements, maintenance decreases and reliability increases.

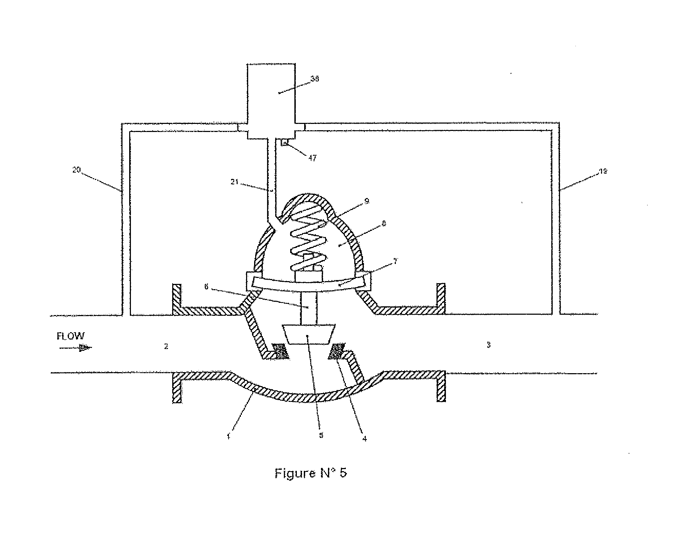

The invention will be described with reference to Figure N°5 and Figure N°6:

Figure N° 5 relates to a pressure regulating valve of the configuration known as pressure reducing valve.

The pilot operated pressure regulating valve comprises: a body [1], and upstream inlet [2] and a downstream inlet [3].

As a part of the body of the valve, between the inlet and outlet, a seat is provided [4] over which a throttling element acts. This throttling element, generally a plug [5] is attached by means of a stem [6] to an actuator [7], this actuator moves the stem and the plug between the totally open and totally closed positions of the valve. Generally, the actuator is a piston o diaphragm as it is illustrated herein. The actuator isolates the upper portion of the valve body generating a control chamber [8] where a spring is housed [9].

Pressure exerted inside the chamber [8] is what controls the movement of the actuator [7]. The actuator in turn allows more or less fluid to flow through the seat [4], thereby increasing or reducing pressure downstream of the valve [3].

In the present invention, the pulse regulating pilot [38] controls pressure inside the chamber [8] through a connecting pipe [21].

The pulse pilot is connected to a high pressure source, which in this case is a point upstream of the valve [2] through a pipe [20], at a point where pressure wants to be controlled, in this case at a point downstream of the valve [3] by means of a piping [19] and to a low pressure source, in this case, the atmosphere, by means of the pipe [47].

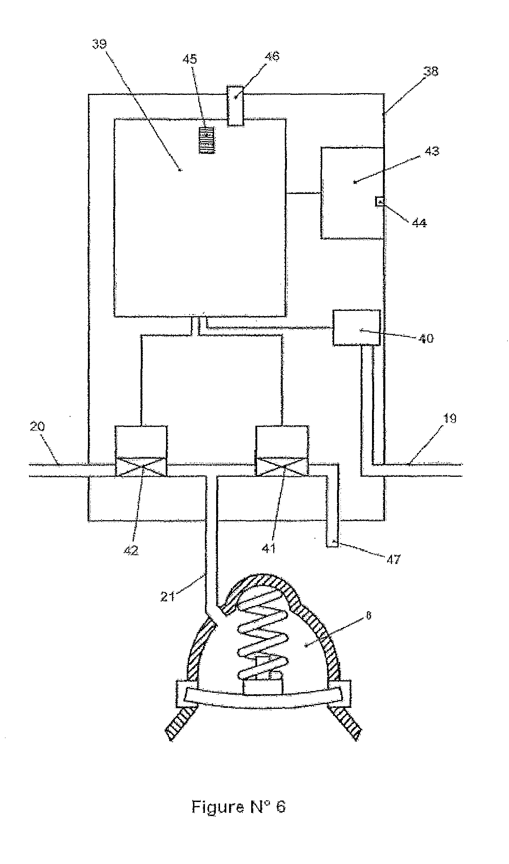

Figure N°6 depicts the components of the pulse regulating pilot [38]:

An electronic controller [39] governs the operation of the pulse pilot.

A transducer or pressure sensor [40] is in connection with a point where pressure wants to be controlled, in this case at a point downstream of the valve [3], through the pipe [19] and sends the controller an electrical signal proportional to the pressure measured in the pipe [19].

An electronic controller is a device similar to a computer, and comprises a processor with programming, memory and math calculation capacity, and input and output units which communicate the processor with external elements such as sensors, transducers, analog ports, digital ports, serial ports, etc...

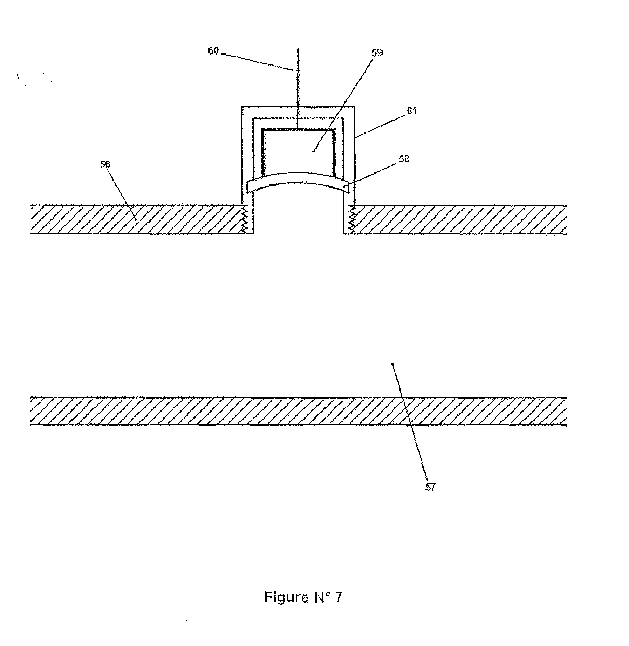

A transducer or pressure sensor Figure N° 7 is generally a cylindrical device [61] which is screwed into the wall of the tank or pipe [56] with the fluid [57] to be measured A flexible membrane [58] isolates the inner portion of the fluid transducer. Membrane deformation under pressure actuates an inner mechanism [59] which generates an electrical or voltage signal which is proportional to the pressure exerted onto the membrane and travels from the transducer or sensor through the wire [60]. Transducers may have different mechanisms including electromechanical, resistive, piezoelectric, piezoceramic or with semiconductors.

The information of a target pressure value, also called pressure set point, reference, or order, is entered locally to the controller through keys or a regulating knob or screw [45], or the target pressure value can be received remotely through a an input and output communication port [46] as a data signal.

An electrically actuated throttling element [41] closes the passage to the pipe [47] which communicates the low pressure source, in this case the atmosphere, with the chamber [8] through the pipe [21]. This throttling element is generally closed, and it is open only when controller allows electrical current to power its driver. During the lapse of time it is open, the chamber of the valve [8] is temporarily exposed to the low pressure source, thereby reducing pressure inside the chamber. Another electrically actuated throttling element [42] closes the passage to the pipe [20] which communicates the high pressure source, in this case a point upstream of the valve [2] with the chamber [8] and the pipe [21].

This throttling element is generally closed, and it is open only when controller allows electrical current to power its driver. During the lapse of time it is open, the chamber of the valve [8] is temporarily exposed to the high pressure source, thereby increasing pressure inside the chamber.

The controller is powered by electric current from the power source [43], which may be autonomous with batteries or externally powered with energy through the connection [44]. This electric source maintains the operation of the controller and energizes the electric drivers of the throttling elements when the controller sends the order.

The operation of the pulse regulating pilot starts with the input of the target value or pressure order by means of the device [45] or [46]. The program installed in the controller waits a programmable lapse and it will read the pressure to be controlled via transducer [40], is this pressure is below pressure order or set point, the controller energizes thereby opening the throttling element [41] during a time pulse allowing the chamber [8] of the regulating valve to temporarily communicate with the atmosphere, thereby reducing pressure inside the chamber and the actuator [7] moves upwards moving the throttling element [5], thereby allowing more fluid to flow through the seat [4] and, consequently, increasing pressure downstream of the valve [3]. The controller will wait again for the next programmable lapse to reed pressure of the transducer [40] and will adjust pressure by means of a new time pulse directed to the throttling element [41] if pressure is below the target pressure or, in turn, directed to the throttling element [42] if pressure read is above the target pressure or pressure order.

In controller finds that opening signals must be sent repeatedly to the same throttling element, then an alarm signal is generated to be sent through the input and output communication port [46].

The duration of time pulses generated by the controller is calculated by a control correction algorithm, such as proportional algorithm, derivative algorithm, proportional-integral-derivative algorithm, previously programmed in the controller.

Pressure order takes numerical value when pressure needs to be regulated to a determined value or may take a status value which can be open or closed.
When the open value is set, the controller will send multiple pulses to the throttling element [41] to leave the chamber [8] completely without pressure. When close value is set, the controller will send multiple pulses to the throttling element [42] to leave the chamber [8] totally pressurized thereby, closing the pressure regulating valve.

The input and output communication port [46] allows data such as present pressure value, information about the open or closed status of the valve, or alarm signals to be sent to remote controllers of other processes.

### Example of the application

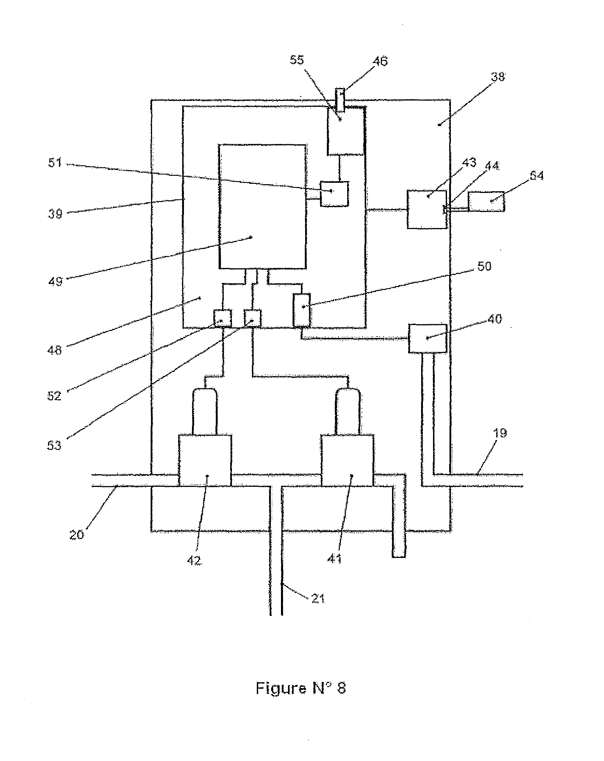

Figure N° 8 depicts an example of the application of a pulse pressure regulating pilot [38].
The controller [39] of this example comprises a plate or electronic card [48] where the processor is mounted [49], in this case a Zilog Inc. Z180 *(7)*; a controller to read 4 to 20 mA current normalized signal [50], a serial communication controller [51] for radio modem and two relay digital outputs, 12 VDC. [52] y [53].

The power source [43] comprises a 7000 mAh, 12VDC dry battery available from EnerSys Inc. *(8)* with 12 volts - 2 watt solar plate charger [54].

The sensor and pressure transducer [40] in this example is a model CTE/CTU8000 available from Sensortechnics GmbH *(9)* which converts fluid pressure into a signal proportional to a 4 and 20 mA current signal.

The input and output communication port [46], in this case, a radio modem [55] model 9XStream available form Maxstream *(10)* allow wireless serial communication with a remote equipment and internal serial communication with the processor [49] through the serial communication driver [51].

In this case, throttling elements are two 12 VDC, 2-way solenoid valves [41] and [42] generally closed, model 330 available from Burkert GmbH (11).
*7. http:*//*www.zilog.com*/*products*/*family.asp?fam=219*
*8. http:*//*www.enersysreservepower.com*/*documents*/*US_NP7_12_01_1102.pdf*
*9.**http"*//*www.sensortechnics.com*/*index.php?fid=300&fpar=YToxONtzOjQ6InBjaWQ103M6MioiNjEiO30%3D&is SSL=0&aps=0&blub=767d33b3f7b4b9539d35420c978c9c61*
*10.* *http:*//*www.maxstream.net*/*products*/*xstream*/*module*/*datasheet-XStream-OEM-RF-Module v4.29,pdf*
*11.* *http:*//*www.bci.buerkert.com*/*Products*/*PDFiles*/*Pub*/*DS 330* 2 *2 Way EU.PDF*

The processor has a program which reads at a fixed frequency f1, the signal sent by pressure transducer [40].

The program also reads at fixed frequency f2, generally below f1, the serial communication port [46] to update possible set point changes which are sent remotely. In the same port [46] at the same frequency, the program also writes present value provided by the pressure transducer. In this case, the local manual regulator [45] is not used since the order is sent remotely.

Then, at frequency f1, the processor program [49] compares the pressure order value with transducer present pressure [40] and if the latter is lower, generates a time pulse which energizes the solenoid valve [41] through the first digital relay output. On the other hand, if the transducer present pressure [40] is higher, it generates a time pulse that now energizes the solenoid valve [42] through the second digital relay output. If the pressure order is equal to the present pressure, nothing is done and it waits until the next transducer reading [40].

In this case, time pulses duration is fixed and corresponds to 200 milliseconds.

## Claims

1. A pilot for a pressure regulating valve which increases reliability, reduces maintenance and adds communication capacity, the pilot comprising elements that control pressure inside the pressure regulating valve by temporarily exposing this chamber to a high pressure source or to a low pressure source wherein the communication pipe between the valve chamber and the high pressure source is blocked by a electrically actuated throttling elements; the communication pipe between the valve chamber and the low pressure source is also blocked by an electrically actuated throttling element, both throttling elements are generally closed and they are opened only when the electric driver is powered; the electric driver is powered by an electronic controller, during the time the throttling element is open, la valve chamber is temporarily in communication with the pressure source which corresponds to the throttling element opened, the throttling elements are opened during time pulses which duration and frequency is determined by such electronic controller; a sensor or pressure transducer is in connection with the point where pressure wants to be regulated, such sensor is connected with the electronic controller and provides the latter with an electric signal which is proportional to the pressure being measured; the electronic controller has a remote or local data input unit where the set point value to be controlled is entered, the electronic controller has a communication port through which data can be interchanged with remote elements, after certain lapse of time the controller reads the set point and pressure value to be controlled and runs the control algorithm that determines the frequency and duration of pulses during which throttling elements will be opened; the electronic controller is powered by a source of electrical energy.

2. A pilot according to claim 1, wherein the high pressure source is at a point upstream of the pressure regulating valve.

3. A pilot according to claim 1, wherein the high pressure source is an air pressure tank.

4. A pilot according to claim 1, wherein the high pressure source is a water pressure tank.

5. A pilot according to claim 1, wherein the low pressure source is at a point downstream of the pressure regulating valve.

6. A pilot according to claim 1, wherein the low pressure source is the atmosphere.

7. A pilot according to claim 1, wherein the throttling element is a valve or piston.

8. A pilot according to claim 7, wherein the valve or piston is driven by pressurized air.

9. A pilot according to claim 8, wherein the pressure air flow is driven by an electric solenoid valve.

10. A pilot according to claim 8, wherein the pressure air flow is driven by an electric motor valve.

11. A pilot according to claim 7, wherein the valve or piston is driven by an electric solenoid.

12. A pilot according to claim 7, wherein the valve or piston is driven by an electric motor.

13. A pilot according to claim 7, wherein the electronic controller is powered by electric energy.

14. A pilot according to claim 13, wherein such source of power is a battery.

15. A pilot according to claim 14, wherein such battery is charged by a solar panel.

16. A pilot according to claim 14, wherein such battery is charged by connecting to a continuous or alternating current outlet.

17. A pilot according to claim 16, wherein the voltage of such electrical outlet is between 0,01 and 220 volts.

18. A pilot according to claim 13, wherein such power source is a continuous or alternating current outlet.

19. A pilot according to claim 18, wherein the voltage of such electrical outlet is between 0,01 and 220 volts.

20. A pilot according to claim 1, wherein the sensor or pressure transducer is a resistive type sensor o pressure transducer.

21. A pilot according to claim 1, wherein the sensor or pressure transducer is a piezo electric type sensor o pressure transducer.

22. A pilot according to claim 1, wherein the sensor or pressure transducer is a piezo ceramic type sensor o pressure transducer.

23. A pilot according to claim 1, wherein the sensor or pressure transducer is a semiconductor-containing type sensor o pressure transducer.

24. A pilot according to claim 1, wherein the data input unit to enter the set point is analog.

25. A pilot according to claim 24, wherein the analog input is a regulating screw or knob.

26. A pilot according to claim 1, wherein the data input unit to enter the set point is digital.

27. A pilot according to claim 26, wherein the digital data input unit is a keyboard.

28. A pilot according to claim 1, wherein the remote communication port is digital.

29. A pilot according to claim 1, wherein the remote communication port is analog.

30. A pilot according to claim 1, wherein the remote communication physical means is a wire.

31. A pilot according to claim 1, wherein the remote communication physical means is air, i.e., wireless.

32. A pilot according to claim 1, wherein time pulses, during which throttling elements are opened, range between 1 millisecond to 40 minutes.

33. A pilot according to claim 1, wherein pulse frequency ranges between 1 millisecond and 24 hours.

34. A pilot according to claim 1, wherein the electronic controller has a memory capacity to store programs and data and a capacity to interchange data with elements outside the controller

35. A pilot according to claim 1, wherein the electronic controller has circuits with capacity to power the electrical drivers of throttling elements.
